(19) Europäisches Patentamt / European Patent Office / Office européen des brevets

(11) **EP 4 120 485 B1**

(12) **EUROPEAN PATENT SPECIFICATION**

(45) Date of publication and mention
of the grant of the patent:
**27.03.2024   Bulletin 2024/13**

(21) Application number: **21186050.7**

(22) Date of filing: **16.07.2021**

(51) International Patent Classification (IPC):
*H01S 3/00* (2006.01)      *G02F 1/35* (2006.01)

(52) Cooperative Patent Classification (CPC):
**H01S 3/0057; G02F 1/3511;** H01S 3/0092;
H01S 2301/08

(54) **LASER PULSE SPECTRAL BROADENING APPARATUS, LASER SOURCE APPARATUS AND METHOD OF CREATING LASER PULSES**

VORRICHTUNG ZUR SPEKTRALEN VERBREITERUNG VON LASERIMPULSEN, LASERQUELLENVORRICHTUNG UND VERFAHREN ZUR ERZEUGUNG VON LASERIMPULSEN

APPAREIL D'ÉLARGISSEMENT SPECTRAL D'IMPULSIONS LASER, APPAREIL DE SOURCE LASER ET PROCÉDÉ DE CRÉATION D'IMPULSIONS LASER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**18.01.2023   Bulletin 2023/03**

(73) Proprietors:
• **Deutsches Elektronen-Synchrotron DESY**
  **22607 Hamburg (DE)**
• **GSI Helmholtzzentrum für Schwerionenforschung GmbH**
  **64291 Darmstadt (DE)**

(72) Inventors:
• **Heyl, Christoph**
  **22607 Hamburg (DE)**
• **Lang, Tino**
  **22607 Hamburg (DE)**
• **Seidel, Marcus**
  **22607 Hamburg (DE)**

(74) Representative: **v. Bezold & Partner Patentanwälte - PartG mbB**
  **Ridlerstraße 57**
  **80339 München (DE)**

(56) References cited:
  **US-A1- 2017 125 964**

• **UEFFING MORITZ ET AL: "Nonlinear pulse compression in a gas-filled multipass cell", OPTICS LETTERS, vol. 43, no. 9, 24 April 2018 (2018-04-24) , page 2070, XP055802756, US ISSN: 0146-9592, DOI: 10.1364/OL.43.002070 Retrieved from the Internet: URL:https://www.osapublishing.org/DirectPDFAccess/421CEDBC-80A6-410F-AA8365A83AC225B D_385791/ol-43-9-2070.pdf?da=1&id=385791&seq=0&mobile=no>**
• **SEIDEL M. ET AL: "Hybridizing Multi-pass and Multi-plate Bulk Compression", EPJ WEB OF CONFERENCES, vol. 243, 2020, page 21001, XP055879647, DOI: 10.1051/epjconf/202024321001**
• **BALLA PRANNAY ET AL: "Factor 40 Pulse Post-Compression of 200 W in-Burst Average Power Pulses via Single-Stage Multi-Pass Spectral Broadening", 2020 CONFERENCE ON LASERS AND ELECTRO-OPTICS (CLEO), OSA, 10 May 2020 (2020-05-10), pages 1-2, XP033824141, DOI: 10.1364/CLEO_SI.2020.SW3E.8 [retrieved on 2020-09-09]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the invention

The invention relates to a laser pulse spectral broadening apparatus for spectral broadening of laser pulses. Furthermore, the invention relates to a laser source apparatus being provided with the laser pulse spectral broadening apparatus and to a method of creating laser pulses, wherein the laser pulse spectral broadening apparatus is employed. Applications of the invention are available e. g. in the fields of laser technology, in particular high-power laser devices, and optics.

Technical background

In the present specification, reference is made to the following prior art illustrating the technical background of the invention:

[1] T. Nagy et al. in "Adv. Physics" X 6, 1845795 (2020).
[2] J. Schulte et al. in "Opt. Lett." 41, 4511 (2016);
[3] L. Lavenu et al. in "Opt. Lett." 43, 2252 (2018);
[4] C. Grebing et al. in "Opt. Lett." 45, 6250 (2020);
[5] M. Kaumanns et al. in "Opt. Lett." 43, 5877 (2018);
[6] P. Balla et al. in "Opt. Lett." 45, 2572 (2020);
[7] J. Song et al. in Appl. Phys. B 127, 50 (2021);
[8] K. Fritsch et al. in "Opt. Lett." 43, 4643 (2018);
[9] J. Weitenberg et al. in "Opt. Express" 25, 20502 (2017);
[10] M. Kaumanns et al. in "Opt. Lett." 46, 929, (2021);
[11] E. A. Khazanov et al. in "Physics-Uspekhi" 62, 1096 (2019);
[12] C. Heyl et al. in "Optica" 3, 75 (2016);
[13] D. R. Herriott et al. in "J. Opt. Soc. Am. B" 34, 1340 (2017);
[14] G. S. Engel et al. in "Opt. Lett." 32, 704 (2007);
[15] F. Guichard et al. in "Optics Letters" Vol. 38, Issue 21, pp. 4437-4440 (2013);
[16] A. Klenke et al. in "Optics Letters" Vol. 39, Issue 12, pp. 3520-3522 (2014);
[17] US 9 847 615 B2;
[18] M. Stanfield et al. in "Opt. Express" 29(6), 9123 (2021); and
[19] M. Ueffing et al. in "Optics Letters" 43, 2070 (2018).

Ultrashort laser pulses play a crucial role in many fields ranging from time- and frequency domain spectroscopy and strong-field physics to everyday-life applications, including surgery and welding. Generation and amplification of ultrashort pulses set constraints on their duration imposed by bandwidth limitations. The most common ultrafast laser platforms, in particular providing pulse energies in the mJ-regime and beyond, are nowadays Titanium:Sapphire (Ti:Sa) and Ytterbium (Yb) -based systems, providing amplified pulses with duration from a few tens of fs (Ti:Sa) to hundreds of fs (Yb). A common method to overcome this limitation is laser pulse post-compression [1], which offers a route to approach the fundamental pulse duration limit defined by the duration of a single half-cycle. Known post-compression methods rely on nonlinear spectral broadening and either simultaneous or subsequent temporal compression of the pulses.

Various spectral broadening methods have been commonly employed [1] including nonlinear propagation within a single or multiple plates, within photonic crystal fibers or hollow-core capillaries (HCC), filaments or slab-waveguides. Recently, a method based on nonlinear spectral broadening within a multi-pass cell (MPC) was introduced [2]. This method offers high transmission [3, 4], high-power handling [4], high beam quality [3, 5] and large compression ratios [5, 6] while being adaptable to a large variety of laser pulse parameters including durations from 10 ps [7] to few-cycles [6, 8] as well as pulse energies from $\mu$l [9] to 112 mJ [10].

Up to now, a key challenge is the adaption of high-performance post-compression methods to high pulse energies. In particular, post-compression methods advancing into the Joule-class pulse energy regime could enable the application to strong-field physics with the potential to overcome peak power limitations of chirped-pulse amplification [11]. While approaches like HCC, MPC or filament-based methods can in principle be scaled to very high pulse energies [12], the required setup-sizes become impractically large. As an example, in a conventional Herriott-type MPC, high intensities occurring at the mirrors are avoided by increasing beam spots on the mirrors. Increasing the beam spot requires an extension of the setup size in order to keep the laser beam mode-matched to the eigenmode of the MPC, which has advantages for achieving good spectral broadening performance. Alternative pulse energy scaling approaches have employed thin films and have been tested using Joule-class pulses [11]. These methods suffer, however, from reduced beam quality compared to fiber and MPC-based methods and only small compression factors could be reached so far.

Other known methods of high pulse energy spectral broadening/compression employ spatial and/or temporal pulse multiplexing (see [15], [16]) as well as higher-order beam modes [10]. These methods reduce the intensity at the mirrors, thus allowing higher pulse energies, but requiring pulse splitting or mode modifications which are often unfavourable for applications. Furthermore, the multiplexing methods increase system complexity especially at large multiplexing factors.

A multi-pass cell device for spectrally broadening laser pulses and for non-linear pulse compression in accordance with the preamble of claim 1 is described in [17]. For overcoming the limitation of the pulse power to less than the critical power of dielectrics, the non-linear phase provided for spectral broadening is divided into small steps which are separated without non-linearity. This multi-pass cell device still suffers from a large set-up size required for scaling to higher pulse energies.

Multi-pass spectral broadening devices that allow large beam sizes at all or at least some of the employed mirrors without requiring an impractically large setup size are discussed in [18, 19]. As these methods employ so-called 4f-imaging configurations, beam size changes are possible without setup-size adjustments. These setups, however, do not support a sufficient spatial beam quality at large broadening factors and thus are not suitable for compression of high pulse energies with large compression factors (factor 10 and more).

In summary, none of the conventional post-compression methods is capable of handling high energy pulses, like multi-100 mJ pulses, at large compression ratios, e. g. 10 and more, while employing laboratory-scale setup sizes, e.g. with a length below 5 m.

Objective of the invention

The objective of the invention is to provide an improved laser pulse spectral broadening apparatus for spectral broadening of laser pulses, an improved laser source apparatus and/or an improved method of creating laser pulses, avoiding the disadvantages of conventional techniques. In particular, laser pulse broadening is to be enabled with a compact configuration, increased pulse energies, e. g. with pulses energies of several 100 mJ or even more, and/or large compression ratios, in particular without requiring complex spatial and temporal multiplexing methods.

Brief summary of the invention

The objective of the invention is solved by a laser pulse spectral broadening apparatus, a laser source apparatus and/or a method of creating laser pulses, comprising the features of the independent claims, respectively. Preferred embodiments and applications of the invention arise from the dependent claims.

According to a first general aspect of the invention, the above objective is solved by a laser pulse spectral broadening apparatus, being configured for spectral broadening of laser pulses. The laser pulse spectral broadening apparatus includes a multi-pass cell device comprising multiple mirror elements, which are arranged for providing a beam path extending from an input section to an output section of the multi-pass cell device. The input section and the output section may be provided e. g. by a hole in one of the mirror elements or by an additional pick-off mirror placed in the beam path. The mirror elements comprise focussing mirror elements having a concave curvature. Furthermore, the laser pulse spectral broadening apparatus comprises a pulse spectral broadening device including at least one optical non-linear medium being arranged in the beam path and being configured for spectral broadening of the laser pulses passing the pulse spectral broadening device, wherein the mirror elements have a configuration providing multiple passages of the beam path through the pulse spectral broadening device.

According to the invention, the mirror elements further comprise folding mirror elements having a close to plane shape, wherein the folding mirror elements span a collimation portion of the beam path and the beam path has a degree of collimation along the whole collimation portion, such that an accumulated collimation portion Gouy phase parameter $G_{col}$ in the collimation portion is $\pi/15 < G_{col} < \pi/2$. In other words, the configuration of the mirror elements, in particular the close to plane shape of the folding mirror elements, is selected such that the beam path is close to collimated along the whole collimation portion. Accordingly, the multi-pass cell device is configured with the collimation portion, i. e. the folding mirror elements are arranged and shaped such that a portion of the beam path within the multi-pass cell device has a close to parallel shape.

Furthermore, according to the invention, the mirror elements are arranged such that an accumulated half round trip Gouy phase parameter $G_{hrt}$ per half round trip through the multi-pass cell device differs from $n*\pi/2$, with n being a natural number. The accumulated half round trip Gouy phase parameter $G_{hrt}$ can be calculated per half round trip through the multi-pass cell device, e. g. per pass from a center of the collimation portion via one focusing mirror to the center of the focusing portion.

In the collimation portion, the multi-pass cell device has a close to parallel outer shape of the light field mode(s). The terms "close to collimated" or "close to parallel" refer to the beam path shape with deviations from the ideal parallel beam path shape. In particular, the degree of collimation along the whole collimation portion deviates from ideal collimation, so that a 4f-imaging configuration (equivalent to operation at the stability edge), e. g. like in [18] or [19], is prevented. The deviation from the ideal parallel beam path shape results from imaging within the multi-pass cell device and from the folding mirror shape being adapted for spatially stable folding the beam path within the multi-pass cell device. The collimation portion includes a weak focus of the beam path determined by the above accumulated collimation portion Gouy phase parameter $G_{col}$. Accordingly, the folding mirror elements have the close to plane shape, wherein the term "close to plane" refers to a plane reflecting surface or a concave or convex reflecting surface with a radius of curvature being selected for enabling the spatially stable multi-pass circulations of laser pulses within the multi-pass cell device. Preferably, the absolute value of the radius of curvature of the close to plane folding mirror elements is larger than 10 m.

The restriction of the half round trip Gouy phase parameter $G_{hrt}$ to values different from $n*\pi/2$ and more specifically, $G_{col} > \pi/15$ prevents operation of the multi-pass cell device close to the stability edge at which the formation of homogeneous spatial beam profiles is no longer possible if large compression factors are targeted. Operation very close to the stability edge would cause an accumulative influence of Kerr-lensing by the nonlinear medium causing a distorted spatial beam profile. The restriction to $G_{col} < \pi/2$ prevents operation in regimes where the beam spots on the folding mirrors reach small sizes leading to mirror damage at high pulse energies.

According to a second general aspect of the invention, the above objective is solved by a laser source apparatus, being configured for creating laser pulses, comprising a laser source being arranged for creating primary laser pulses, and a laser pulse spectral broadening apparatus according to the first general aspect of the invention or an embodiment thereof, wherein the laser pulse spectral broadening apparatus is arranged for receiving and for spectral broadening of the primary laser pulses. Preferably, a beam mode of the laser source is matched to a light field mode, particularly preferred to an eigenmode, defined by the multi-pass cell device of the the laser pulse spectral broadening apparatus, in particular in nonlinear operation conditions taking the lensing effect of at least one nonlinear medium into account or in linear operation conditions. Furthermore, particularly preferred, the multi-pass cell device itself is arranged for temporal compressing of the spectrally broadened laser pulses and/or a pulse compression device, being coupled with the multi-pass cell device, is arranged for receiving and for temporal compressing of the spectrally broadened laser pulses.

According to a third general aspect of the invention, the above objective is solved by a method of creating laser pulses, comprising the steps of creating primary laser pulses with a laser source, and spectrally broadening the primary laser pulses with a laser pulse spectral broadening apparatus according to the first general aspect of the invention or an embodiment thereof. Preferably, a beam mode of the laser source is matched to a light field mode defined by the multi-pass cell device of the laser pulse spectral broadening apparatus. Particularly preferred, creating the laser pulses includes temporally compressing the spectrally broadened laser pulses with the multi-pass cell device of the laser pulse spectral broadening apparatus and/or with a separate pulse compression device.

With the invention, the inventors have found a new multi-pass cell device configuration that enables mode-matched laser pulse circulation, i. e. a new operative configuration within the stability range of the multi-pass cell device, repeating the spatial laser beam profile after each circulation through the multi-pass cell device. Advantageously, using preferably a four- (or more) mirror geometry, the multi-pass cell device is arranged such that a large laser beam diameter is reached at all mirror elements of the multi-pass cell device. Due to the folded collimation portion, a long propagation path per circulation through the multi-pass cell device is obtained, thus enabling configurations with large beam size and large laser beam spot sizes on all folding mirrors elements, and thus allowing high pulse energies while utilizing all advantages of MPC-based spectral broadening as known from conventional techniques. In contrast to conventional techniques, the multi-pass cell device is suitable for spectral broadening applications with spot sizes supporting > 1 J class laser pulses with durations in the ps or fs regime.

In particular in contrast to [17], the close to plane folding mirrors do not enclose a strong beam path focus, thus allowing the provision of large spot sizes on the mirrors. In addition, the invention allows the usage of rather compact mirror sizes despite the provision of a plurality of large beam spots per mirror element, in particular via a compact geometrical arrangement of the beam spots on the focusing and/or folding mirrors. Furthermore, the provision of the collimation portion in the multi-pass cell device allows employing a beam folding geometry resulting in a compact configuration of the laser pulse spectral broadening apparatus. Advantageously, the multi-pass cell device employed with the invention has the characteristic that the largest dimension of the setup does not necessarily scale with pulse energy, like for conventional Herriott-type MPCs or large core capillaries.

The invention relies on the repetitive nonlinear spectral broadening of laser pulses via multiple passages through at least one optical nonlinear medium arranged in the multi-pass cell device, preferably accompanied and/or followed by recompression, e. g. employing standard temporal pulse compression methods. The multi-pass cell device allows that a sufficiently large laser beam diameter is reached at all mirrors forming the multi-pass cell device thus mitigating mirror damage, which is limiting the maximum pulse energy in conventional techniques. Moreover, the inventors provide scaling routes outlining upscaling options to Joule-class laser pulses promising efficient compression of TW-class laser pulses, thus offering new perspectives for extreme nonlinear optics and high-field physics, while the largest setup-dimension can be reduced in comparison with prior art systems, e. g. according to [10].

As a further aspect of the invention, all multi-pass cell devices employed according to the invention can easily be pulse energy scaled by applying geometrical scaling relations, e. g. as discussed in [12], outlining in particular a linear scaling of setup length L and mirror radius of curvature R with E (i.e. $L \sim E$ and $R \sim E$) and an inverse scaling of the gas density $\rho$ (i.e. $\rho \sim 1/E$) for gas-filled multi-pass cell devices. For multi-pass cells employing a bulk nonlinear medium, similar scaling approaches can be applied. This enables further energy-upscaling at increased setup-size. In addition, by applying the same setup configuration at much smaller setup size, very compact post-compression devices can be constructed, in particular with characteristic dimensions in the cm range, e.g. for small pulse energies in the mJ to $\mu$J regime.

According to a preferred embodiment of the invention (in the following: first embodiment), the focussing mirror elements span a focal portion of the beam path, wherein the focal portion includes at least one focus of the beam path. Furthermore, according to the first embodiment, the collimation portion and the focal portion are arranged adjacent to each other with the beam path being folded by the folding mirrors, wherein the laser pulses alternatingly pass the collimation portion and the focal portion. The focal portion preferably provides a multi-path section of the multi-pass cell device, wherein the focussing mirror elements are arranged for multiple, e. g. 5 to 10 or more, reflections of the beam path with one single focus per pass between each pair of focussing mirrors. Advantageously, the provision of the focal portion allows setting the multi-pass cell device configuration in the stability range of the multi-pass cell device with the half round trip Gouy phase parameter $G_{hrt}$ with $0 < G_{hrt} < \pi/2$ or $\pi/2 < G_{hrt} < \pi$, with the half round trip Gouy phase parameter $G_{hrt}$ being calculated per half round trip through the multi-pass system (from the center of the collimated beam portion to the center of focused beam portion). Accordingly, the accumulated Gouy phase in one round trip through the multi-pass cell device is unequal to an integer multiple of $\pi$. As a further advantage, the focal portion in combination with the collimation portion provides the folded, compact configuration of the multi-pass cell device.

With the first embodiment of the invention, a large spot size on each mirror element is reached by employing the multi-pass cell device in which the laser pulses travel alternatingly along the collimated portion, wherein the laser pulses are reflected multiple times between the folding mirror elements, and the focal portion. The beam path is tightly focused in the focal portion and collimated (or close to collimated) in the collimated portion. The collimated portion can be folded multiple times to enable long path lengths. This way, a beam preferably matched to the eigenmode of the multi-pass cell device comprises large spot diameters at all mirrors.

According to an advantageous example, using nonlinear pulse propagation simulations derived from realistic experimental conditions, the inventors have numerically demonstrated e.g. compression of 120 mJ, 1 ps pulses at 1030 nm to < 65 fs employing a compact setup of e. g. 2 m length with the configuration according to the first embodiment of the invention.

According to another preferred embodiment of the invention (in the following: second embodiment), the focussing mirror elements are arranged for reflecting end sections of the collimation portion back to the collimation portion, the beam path is free of a focus (i. e. there is no tight focus, while a beam waist resulting from close to collimated shape of the beam path may occur) and the multi-pass cell has the half round trip circulation Gouy phase parameter $G_{hrt}$ with $\pi/15 < G_{hrt} < \pi/2$, with the half round trip Gouy phase parameter $G_{hrt}$ being calculated per half of the pass through the multi-pass cell device from a center of the collimation portion via one of the focussing mirror elements back to the center of the collimation portion. With the second embodiment, the half round trip circulation Gouy phase parameter $G_{hrt}$ is equal to the accumulated collimation portion Gouy phase parameter $G_{col}$. The inventors have found that a new part of the stability range of the multi-pass cell device can be employed with the above features of the second embodiment, wherein the multi-pass cell device is configured without any tight focus along the beam path thereof. The focussing mirrors reflecting the laser back to the collimated portion are sufficient for a stable operation of the multi-pass cell device.

Advantageously, using the configuration according to the second embodiment, the inventors have numerically demonstrated e.g. compression of 120 mJ, 1 ps pulses at 1030 nm to < 35 fs employing a compact setup of e. g. 2 m length.

The at least one optical nonlinear medium of the pulse spectral broadening device may comprise a solid, e. g. a dielectric plate (for instance, made of glass) or a gaseous material, e. g. a gas in the multi-pass cell device or portions thereof. Further advantages of the invention result from a variety of configurations of the pulse spectral broadening device, which can be implemented separately or in combination with the laser pulse spectral broadening apparatus. According to a first variant, the pulse spectral broadening device, in particular the at least one optical non-linear medium thereof, can be arranged in the collimation portion. Accordingly, the at least one optical non-linear medium is passed by the collimated or close to collimated beam path. Advantageously, this allows a large beam diameter within the at least one optical non-linear medium, so that ionisation effects or a damage of the at least one optical non-linear medium can be avoided.

Alternatively or additionally, the pulse spectral broadening device, in particular the at least one optical non-linear medium thereof, can be arranged close to at least one of the focussing mirrors. This arrangement may have advantages for adjusting pulse broadening parameters, while still avoiding ionisation effects or damages of the at least one optical non-linear medium.

According to further alternative or additional variants, the pulse spectral broadening device may comprise a single optical non-linear medium or multiple optical non-linear media. The single optical non-linear medium has an advantage in terms of simplifying the configuration of the laser pulse spectral broadening apparatus and minimizing power losses. Employing multiple optical non-linear media has advantages resulting from distributing the optical non-linearity within the multi-pass cell device and increasing the spectral broadening of the laser pulses, i. e. obtaining an enlarged spectral range of the broadened pulses.

With a further option, the pulse spectral broadening device may comprise a gas medium filling the entire multi-pass cell device. With this embodiment, a continuous distribution of the optical non-linearity within the multi-pass cell device is obtained in an advantageous manner and the spectral broadening of the laser pulses is further increased. Preferably, the multi-pass cell device is arranged in a chamber filled with the gas medium as nonlinear medium. Advantageously, the chamber allows a confinement of the gas around the multi-pass cell device with a predetermined pressure, which may be below, equal to or above atmospheric pressure. The gas medium can be combined with at least one solid optical non-linear medium.

According to a further preferred embodiment of the invention, the focussing mirror elements are provided by reflecting sections of two focusing mirrors, which are arranged with a distance relative to each other. Accordingly, two focussing mirrors are provided, each with a concave reflecting surface, which span the focal portion in a multi-pass configuration therebetween (first embodiment of the invention) or which reflect end sections of the collimation portion back to the collimation portion (second embodiment of the invention).

Alternatively or additionally, according to another preferred embodiment of the invention, the folding mirror elements are provided by reflecting sections of two folding mirrors, which are arranged with a distance relative to each other. Accordingly, two folding mirrors are provided, each with a flat or close to flat reflecting surface, which span the collimated portion in a multi-pass configuration therebetween (first and second embodiments of the invention).

With these embodiments, the laser pulse spectral broadening apparatus may comprise for instance only four large solid mirrors providing all mirror elements, so that the mechanical stability of the multi-pass cell device can be improved.

Alternatively, each of the mirror elements can be provided by a single focusing mirror or a single folding mirror. Thus, with a further embodiment of the invention, the focussing mirror elements are provided by a first group of focusing mirrors and a second group of focusing mirrors, wherein the first and second groups of focusing mirrors are arranged with a distance from each other. Additionally or alternatively, the folding mirror elements are provided by a first group of folding mirrors and a second group of folding mirrors, wherein the first and second groups of folding mirrors are arranged with a distance from each other. Using single focusing and/or folding mirrors offers advantages for specifically adjusting and/or exchanging a single mirror without changing the other mirrors. In addition, using single focussing and/or folding mirrors offers increased flexibility to minimize the beam angle of incidence at the focusing mirrors in order to minimize beam distortions caused by astigmatism.

With further alternative embodiments, single focusing and/or folding mirrors can be combined with large focusing and/or folding mirrors including multiple mirror elements.

The mirror elements, i. e. the larger focusing and/or folding mirrors or the single focusing and/or folding mirrors preferably comprise reflecting multi-layer, e.g. dielectric and/or semiconductor, surfaces or metallic surfaces or a combination of both, optionally being configured for applying a chirp to the laser pulses circulating in the multi-path cell device.

Advantageously, multiple multi-pass cell device geometries are available. According to a first variant of multi-pass cell device geometries, the folding mirror elements may provide a single line or multiple lines multi-pass pattern and/or the focussing mirror elements provide a single line or multiple lines multi-pass pattern (so called bow tie configuration of the multi-pass cell device). According to a second variant of multi-pass cell device geometries, the folding mirror elements provide a circular or elliptical multi-pass pattern and/or the focussing mirror elements provide a circular or elliptical multi-pass pattern (so called cylindrical configuration of the multi-pass cell device). In the case of the cylindrical configuration, the multi-pass cell device has a cylindrically symmetric arrangement. To enable folding towards the symmetry axis, the folding mirrors are designed to be slightly curved (convex), the beam is less well collimated in the collimation region with the cylindrical configuration.

The bow tie configuration has a particular advantage as the beam size can be kept approximately constant for all mirror reflections of the folding mirror elements and focusing mirror elements. Thus, larger pulse energies can be used. On the other hand, the cylindrical configuration has advantages in terms of the rotational symmetry of the multi-pass cell device, which minimizes laser beam distortions, like astigmatism.

According to a further advantageous embodiment of the invention, the folding mirror elements are arranged with a V configuration, wherein normal directions of the folding mirror elements enclose an inclination angle different from zero. The V-shaped arrangement of the mirror elements has a particular advantage as e. g. by using two mirrors elements in the V-shaped arrangement, many beam convolutions can be made possible in a compact design since the distance between adjacent reflection spots in the V-shaped arrangement is larger on one side of the collimation portion (for coupling/uncoupling), but smaller on the other side of the collimation portion (allowing partially overlapping beams).

The multi-pass cell device itself can be adapted for temporal compressing simultaneously with the spectral broadening of the laser pulses. To this end, at least one of the mirror elements preferably is a chirped mirror element. Advantageously, the at least one chirped mirror element fulfills a double function in terms of reflecting the laser pulses along the beam path of the multi-pass cell device and applying a frequency chirp to the laser pulses, resulting in the temporal compression thereof. Optionally, at longer wavelengths, temporal compression can be introduced by material dispersion into the beam path of the multi-pass cell device.

Features disclosed in the context of the laser pulse spectral broadening apparatus and the embodiments thereof also represent preferred features of the inventive laser source apparatus and/or method of creating laser pulses and the embodiments thereof, and vice versa. The aforementioned aspects and inventive and preferred features, in particular with regard to the configuration of and method of operating the laser pulse spectral broadening apparatus as well as the dimensions and compositions of individual optical components which are described in relation to the laser pulse spectral broadening apparatus, therefore also apply for the laser source apparatus and/or method of creating laser pulses. The preferred embodiments, variants and features of the invention described above are combinable with one another as desired.

Brief description of the drawings

Further details and advantages of the invention are described in the following with reference to the attached drawings, which schematically shown in:

Figure 1:     an example of a conventional multi-pass cell device (prior art);

Figure 2:     features of the first embodiment of the laser pulse spectral broadening apparatus according to the invention with the bow tie configuration;

Figure 3:     a stability diagram illustrating features of the multi-pass cell devices employed according to the invention;

Figure 4:     results of numerical simulations of the maximum peak power and energy of laser pulses created according to the invention;

Figure 5:     features of the first embodiment of the laser pulse spectral broadening apparatus according to the invention with the cylindrical configuration;

Figure 6:     features of the second embodiment of the laser pulse spectral broadening apparatus according to the invention with the bow tie configuration; and

Figure 7:     features of an embodiment of the laser source apparatus according to the invention.

Preferred embodiments of the invention

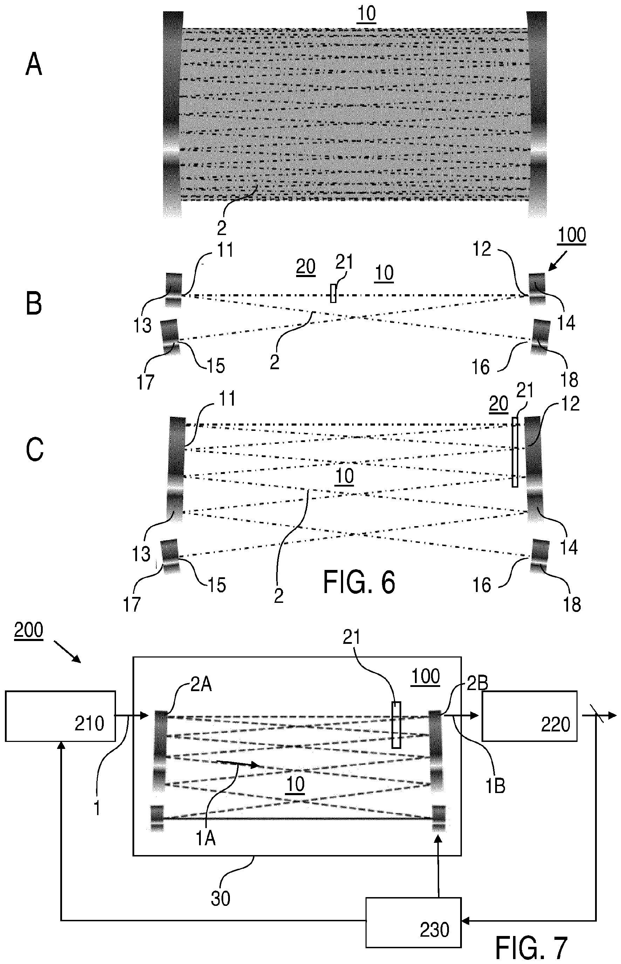

Features of preferred embodiments of the invention are described in the following with exemplary reference to embodiments, wherein the multiple mirror elements of the multi-pass cell device are provided by surface sections of large mirrors. It is emphasized that the laser pulse spectral broadening apparatus may be configured in corresponding manner with single mirrors each providing one of the mirror elements. Reference is made in particular to the configuration of the multi-pass cell device. Details of a laser source creating the laser pulses and an optional pulse compressing device (see Figure 7) can be selected as it is known from conventional techniques.

As an example, reference is made to configurations, wherein a longitudinal axis of the multi-pass cell device (z axis) extends parallel to a surface of a carrier platform supporting the multi-pass cell device, with normal directions of the mirror elements being aligned parallel or slightly inclined relative to the z axis, the carrier platform surface extending e. g. in an x-z-plane of a Cartesian system and groups of mirror elements of collimation and focal portions of the multi-pass cell device extending in x-y-planes perpendicular to the carrier platform surface. It is emphasized that the implementation of the invention in practice is not restricted to this spatial orientation. Furthermore, the particular components, configurations, parameters and processes can be varied in dependence on the application conditions of the invention.

In the following, general pulse energy scaling principles of the multi-pass cell device and embodiments of multi-pass cell types are discussed which enable large beam spot sizes at all mirror surfaces and operation at high pulse energies while keeping the setup size compact. The analytical analysis is supported by numerical simulations. It shows that in particular highly efficient MPC-based pulse-post compression at large compression ratios can be extended to several 100 mJ pulse energies and multi-TW peak powers using a table-top setup.

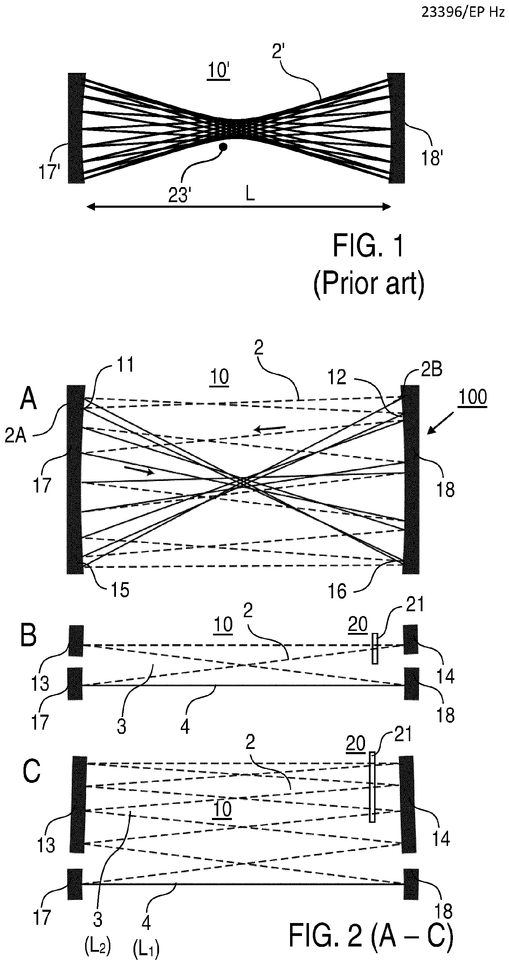

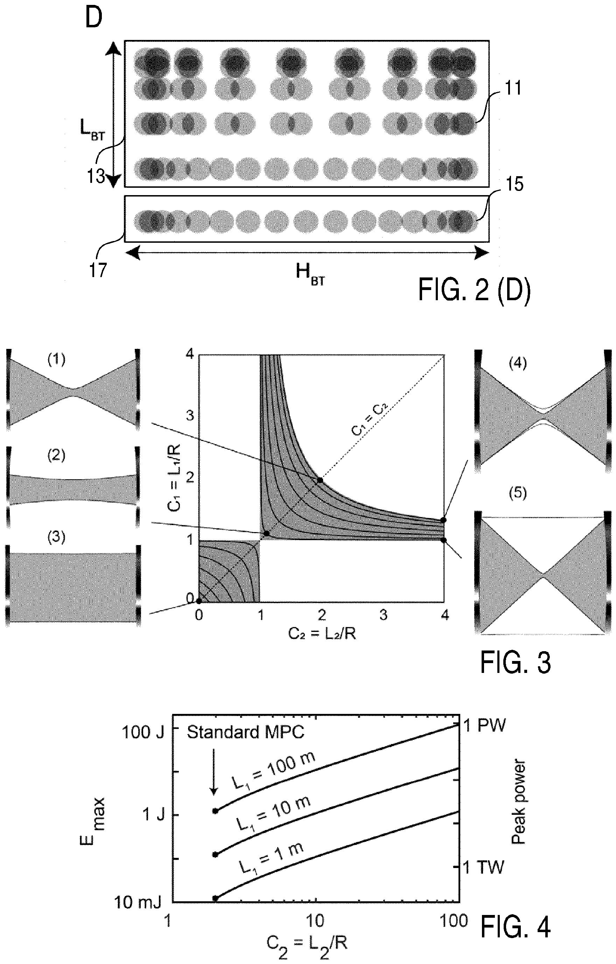

Firstly, reference is made to a conventional multi-pass cell device as shown in Figure 1. Subsequently, embodiments of the inventive laser pulse spectral broadening apparatus 100 are described with particular reference to the design of the multi-pass cell device thereof, as shown in Figures 2 to 6. Features of the laser source device 200 including the laser pulse spectral broadening apparatus 100 are described with reference to Figure 7.

Figure 1 illustrates a standard Herriott-type multi-pass cell device 10' (prior art, see e. g. [13]) with two identical concave large mirrors 17', 18' with radius of curvature R placed at a distance L and multiple foci in the center therebetween (one focus per pass). The multi-pass cell device 10' is filled with a gas as optical nonlinear medium 23'. Alternatively, the multi-pass cell device 10' can be partially filled with nonlinear media, such as one or more anti-reflection coated fused silica windows or glass plates. A reentrant beam pattern with a repeating beam path 2' after N round trips through the multi-pass cell device 10' can be reached by obeying the following relation for the ratio C of L and R (see [14]):

$$C = \frac{L}{R} = 1 - \cos\left(\pi k / N\right)$$

(1)

where k = 1, ..., (N -1) denotes a variable integer. In order to obtain a q-preserving multi-pass cell device (with q defining the complex beam parameter) ensuring similar nonlinear pulse propagation characteristics for each round trip, the input beam needs to be mode-matched to the eigenmode of the multi-pass cell, which is identical to the mode of a corresponding cavity formed by the two-mirror arrangement.

For nonlinear spectral broadening, an optical nonlinear medium, such as the gas 23' or a glass plate is inserted into the multi-pass cell device 10'. Considering nonlinear pulse propagation determined by self-phase modulation governed by the nonlinear refractive index change $\Delta n = n_2 I$, where $n_2$ is the instantaneous nonlinear refractive index and $I$ the light pulse intensity, the pulse energy can be increased while decreasing $n_2$ until the mirror damage threshold or a focus intensity leading to ionization of the gas is reached. For pulse-energy upscaling, the usage of the gas as optical nonlinear medium 23' provides advantages compared to solids including immunity to damage, a smaller refractive index and the ability to handle higher peak intensities. Moreover, the gas pressure p provides a simple way to tune $n_2 \sim p$. Bulk media, on the other hand, provide advantages as they can more easily be localized to a section in the MPC where the intensity is sufficiently low to avoid damage or ionization.

Taking the example of a multi-pass cell device 10' with R = 1 m operated close to the stability edge with k = 14, N = 15, λ = 1030 nm, a pulse width t = 1 ps, and considering a mirror damage threshold of $F_{th}$ = 500 mJ/cm$^2$, an energy limit of 24.5 mJ and a corresponding peak focus intensity of 4.6 * 10$^{13}$ W/cm$^2$ is obtained. The corresponding MPC length amounts to L = R * C = 1.978 m.

In order to increase the pulse energy beyond this limit while enabling operation employing a fundamental Gaussian beam mode, multiple tuning parameters can be identified: N, λ and R. For increasing N, $F_m$ but also the focus intensity $I_0$ increase. While the fluence limit can thus be circumvented, ionization effects in the focus will limit the maximum pulse energy for gas-filled multi-pass cell devices. In addition, operation of the MPC very close to the stability edge (C ≈ 2) implies increased sensitivity to perturbations. In addition, the MPC imaging properties at the stability edges will prevent homogenization of the spatial beam profile when C ≈ 2 (equivalent to $G_{hrt}$ = π) is reached - one of the most advantageous properties of nonlinear MPCs. Larger pulse energies can also be reached for longer wavelengths.

The practically most relevant pulse energy tuning option for the conventional multi-pass cell device 10' is provided by the setup size, showing a straightforward linear scaling relation between setup size and maximum pulse energy. For gas-filled MPCs it can be shown that this energy scaling method obeys fully scale-invariant characteristics providing spectral broadening properties which do not depend on the laser pulse energy if setup size and gas density are scaled according to basic relations outlined in Ref. [11].

With the invention, as illustrated in Figures 2 to 7, pulse energy scaling options beyond the above limits are introduced. By utilizing principles applied to optical resonator design relating long resonator lengths with large mode sizes, the inventors have found folded long path-length multi-pass cell devices of compact size. If the folding mirrors are only placed in sections of large beam size (collimation portion), high pulse energies can be supported as described in the following.

According to Figure 2, the conventional two mirror multi-pass cell device of Figure 1 is replaced by a four-mirror multi-pass cell device 10, being arranged e. g. in the bow-tie configuration. Figure 2A shows a side view and Figures 2B and 2C show two exemplary top views of different embodiments of the multi-pass cell device 10. The beam path 2 is displayed in a simplified configuration in Figure 2A, i.e. depicting straight beam paths (dashed lines) instead of folded beam paths between focusing mirrors 17 and 18 within the collimated section of the multi-pass device.

With more details, the laser pulse spectral broadening apparatus 100 of Figure 2 comprises the multi-pass cell device 10 with multiple mirror elements 11, 12, 15 and 16 provided by a pair of folding mirrors 13, 14 and a pair of focussing mirrors 17, 18. The mirror elements 11, 12, 15 and 16 span a beam path 2 extending from an input section, e. g. at 2A, to an output section, e. g. at 2B, provided e.g. by holes in the folding mirrors 13, 14. The laser pulse spectral broadening apparatus 100 of Figure 2 represents the first embodiment of the invention, i. e. the folding mirror elements 11, 12 (provided by the folding mirrors 13, 14) span a collimation portion 3 of the beam path 2, and the focussing mirror elements 15, 16 (provided by the focussing mirrors 17, 18) span a focal portion 4 of the beam path 2.

The mirror elements 11, 12, 15 and 16 are sections of the folding mirrors 13, 14 and focussing mirrors 17, 18, where the beam path 2 is reflected (as illustrated with exemplary mirror elements 11 and 15 by the beam path spots formed on the mirrors 13 and 17 in Figure 2D). Depending on the position along the height $H_{BT}$ and lengths $L_{BT}$ of the mirrors 13 and 17 within the multi-pass cell device 10, the mirror elements 11 and 15 may be separate sections of the folding mirrors 13, 14 and focussing mirrors 17, 18 or overlapping sections of the folding mirrors 13, 14 and focussing mirrors 17, 18.

The folding mirrors 13, 14 comprise close to plane mirrors being arranged with a V configuration, i. e. the folding mirrors 13, 14 are not parallel to each other, but rather inclined with the normal directions of the mirror surfaces deviating from each other. The focussing mirrors 17, 18 have an identical concave curvature.

A pulse spectral broadening device 20 is provided by an optical non-linear medium 21 formed by a dielectric plate, e. g. made of glass with a thickness of 0.5 mm. The optical non-linear medium 21 is arranged in the collimation portion 3 for spectral broadening of the laser pulses with each pass through the dielectric plate.

With the multi-pass cell device 10 of Figure 2, the optical beam path 2 has a first length $L_2$ from focussing mirror 17 via the folded collimation portion 3 to focussing mirror 18 which is different from a second length $L_1$ of the returning path from focussing mirror 18 via the focal portion 4 to focussing mirror 17 (see Figure 2C). For example, $L_2 \approx 3\,L_1$ in Figure 2B and $L_2 \approx 9\,L_1$ in Figure 2C. The multi-pass cell device 10 of Figure 2 has a half round trip Gouy phase parameter $G_{hrt} = \pi*4/9$. ($G_{hrt}$ being calculated per pass from a center of the collimation portion 3 via one focusing mirror to the center of the focusing portion 4).

Without loss of generality, $L_2 \geq L_1$ is assumed in the following. Similar to equation 1, a general equation describing the solutions for a reentrant beam pattern in multi-pass cell device 10 of Figure 2 with two identical concave mirrors 17, 18 of radii R can be derived:

$$C_1 + C_2 - C_1 C_2 = \sin^2(\pi k / N) \quad \text{with k} = 1, 2, ...N, \tag{2}$$

with $C_1 = L_1/R$ and $C_2 = L_2/R$ defined analogously to equation 1.

With a practical implementation, the multi-pass cell device 10 of Figure 2 is configured e. g. with the following parameters: dimensions of the folding mirrors 13, 14: $L_{BT} * H_{BT}$ = 10 cm * 10 cm, dimensions of the focussing mirrors 17, 18: 5 cm * 10 cm, radius of curvature of the focussing mirrors 17, 18: 1 m, folding mirrors 13, 14: plane mirrors, number of passes along the collimation portion 3: 9x9 = 81 (9 circulations through the system, 9-times folded beam path along the collimated portion), number of passes along the focal portion 4: 9, path length $L_2$ = 9 m, path length $L_1$ = 1.0038 m, corresponding to N = 9 and k = 4.

Figure 3 shows the stability diagram for the bow tie configuration of the multi-pass cell device 10 (Figure 2). The standard MPC parameter space with $L_1 = L_2$ is indicated with a dotted diagonal line. Cavity modes (grey areas) are illustrated schematically for five important example configurations (enlarged vertical dimension for better mode visibility) for constant $L_1$ and different R (panels (1) to (5)).

The solution of equation 2, i.e. the function $C_1(C_2)$ is shown in Figure 3 using the example of N = 15 for k = 1, 2, ..., 5, 6, 7 (black solid lines). Equation 2 defines again (N -1) solutions, each solution appearing twice. It is therefore sufficient to consider k = 1, 2, ..., N/2. The white areas in Figure 3 mark regions outside the stability range.

Equation 2 convergences towards equation 1 for $L_1 = L_2$, i.e. the crossing points of the solutions $C_1(C_2)$ with the diagonal line $C_1 = C_2$ (equivalent to $L_1 = L_2$) represent the standard two-mirror Herriott cell (Figure 1).

The collimated beam in the collimation portion 3, i. e. along $L_2$, brings along an important advantage of the invention: the beam path along $L_2$ can be folded even multiple times without increasing the maximum mirror fluence, providing broad range of variants for the construction of compact Multi-pass cell devices as the system length is only be determined by $L_1$ with $L_1 \approx R$ for large $C_2$.

At large asymmetries $L_2/L_1$, the collimation portion 3 along $L_2$ is preferably folded many times in order to keep the system compact, which is easily possible using todays multi-layer mirror technology supporting pulse durations of 30 fs and below with losses at the few-part per million level thus enabling system transmission above 90% even for beam paths folded 100 times and more.

While the beam spot size at the mirror surface increases with $L_2$ causing a decreasing fluence, the focus peak intensity at the tighter focus intersected by $L_1$ increases. Ionization at the tight focus of the multi-pass cell device 10 can be avoided by operation inside a closable chamber at a low residual gas-pressure. For spectral broadening an optical nonlinear medium is placed within another section of the multi-pass cell device 10 (see e. g. Figures 2B, C). This could be either a solid medium 21 placed e.g. in the collimation portion 3 along $L_2$ and/or a gas medium separated from the location of the tight focus via differential pumping.

Figure 4 illustrates results of a numerical estimate of the maximum pulse energy and peak power of broadened and temporally compressed laser pulses in dependence on the parameter $C_2 = L_2/R$, i. e. the length of the collimation portion 3 divided by the radius of curvature of the focussing mirrors 17, 18, for various examples of the length $L_1$ of the focal portion 4 assuming a laser wavelength of 1030, a mirror fluence limit of 0.5 $J/cm^2$ and a geometrical configuration defined by equation 2 with k = 7 and N = 15. The peak power was calculated with the simplification of assuming a perfect temporal Gaussian pulse shape and a compressed pulse duration of 65 fs. The numerical estimates displayed in Figure 4 are obtained assuming operation of the multi-pass cell device using linear mode-matching approaches. Depending on the operation regime, nonlinear mode-matching might be required for optimum performance, resulting in deviations from the displayed parameters due to changed beam spot sizes. Both graphics demonstrate the energy scaling capability of the inventive laser pulse spectral broadening apparatus 100.

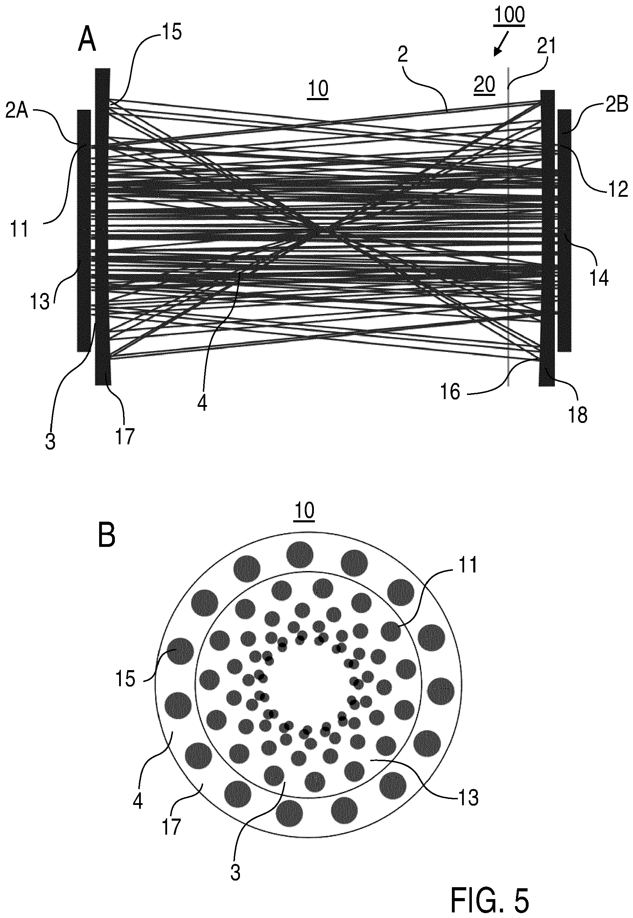

The invention is not restricted to the bow tie configuration of the multi-pass cell device 10 according to Figure 2. As an alternative, a cylindrical configuration can be employed with the first embodiment of the invention, as shown in Figure 5.

The multi-pass cell device 10 of the laser pulse spectral broadening apparatus 100 of Figure 5A comprises multiple mirror elements 11, 12, 15 and 16 provided by a pair of plane or close to plane folding mirrors 13, 14 and a pair of ring-shaped curved focussing mirrors 17, 18. The focussing mirrors 17, 18 have an identical concave curvature. The mirror elements 11, 12, 15 and 16 span the beam path 2 extending from an input section, e. g. at 2A, to an output section, e. g. at 2B, provided e.g. by holes in the focussing mirrors 17, 18 and having a spot pattern as shown in Figure 5B. The beam path 2 comprises the collimation portion 3 spanned by the folding mirrors 13, 14 and the focal portion 4 spanned by the focussing mirrors 17, 18. The multi-pass cell device 10 of Figure 5 has a Gouy phase parameter $G_{hrt} = \pi*8/15$. ($G_{hrt}$ being calculated per pass from the center of the collimation portion 3 via one focusing mirror to the center of the focusing portion 4).

As mentioned with reference to Figure 2, the mirror elements 11, 12, 15 and 16 are sections of the folding mirrors 13, 14 and focussing mirrors 17, 18, where the beam path 2 is reflected (illustrated by the beam path spots formed on the mirrors 13 and 17 in Figure 5B). Depending on the position within the multi-pass cell device 10, the mirror elements 11 and 15 may be separate sections of the folding mirrors 13, 14 and focussing mirrors 17, 18 or overlapping sections of the folding mirrors 13, 14 and focussing mirrors 17, 18.

The optical non-linear medium 21 of the pulse spectral broadening device 20 is a dielectric plate, e. g. made of glass with a thickness of 0.5 mm, which is arranged in the collimation portion 3 for spectral broadening of the laser pulses with each pass through the dielectric plate.

With a practical implementation, the multi-pass cell device 10 of Figure 5 is configured e. g. with the following parameters: diameter of the folding mirrors 13, 14: 140 mm, outer diameter of the ring shaped focussing mirrors 17, 18: 200 mm, inner diameter of the ring shaped focussing mirrors 17, 18: 140 mm, radius of curvature of the focussing mirrors 17, 18: 1 m, radius of curvature of the folding mirrors 13, 14: -10 m (weakly convex mirror), number of passes along the collimation portion 3: 105 (15 circulations through the system which is folded 7 times), number of passes along the focal portion 4: 15, distance between focusing mirrors: 1.17 m, distance between folding mirrors 1.25 m, corresponding to N = 15.

Figure 6 illustrates features of the second embodiment of the invention, wherein the beam path 2 of the multi-pass cell device 10 is free of a tight focus. The multi-pass cell device 10 comprises a pair of folding mirrors 13, 14, each with a plurality of folding mirror elements 11, 12 spanning the collimation portion 3 of the multi-pass cell device 10. The collimation portion 3 includes the optical non-linear element 21 of the pulse spectral broadening device 20. Furthermore, the multi-pass cell device 10 comprises a pair of focussing mirrors 17, 18 with a plurality of focussing mirror elements 15, 16 which are arranged for reflecting end sections of the collimation portion 3 back to the collimation portion 3. Figure 6A shows a side view of the multi-pass cell device 10, and Figures 6B and 6C show top views of the multi-pass cell device 10 with $L_2 \approx 3L_1$ and $L_2 \approx 9L_1$. The multi-pass cell device 10 of Figure 6 has a half round trip Gouy phase parameter $G_{hrt} = \pi*2/15$. ($G_{hrt}$ being calculated per half of the pass from the center of the collimation portion 3 via one focusing mirror back to the center of the collimation portion 3).

With a practical implementation, the multi-pass cell device 10 of Figure 6 is configured e. g. with the following parameters: dimensions of the folding mirrors 13, 14: 25 cm * 18 cm, dimensions of the focussing mirrors 17, 18: 5 cm * 18 cm, radius of curvature of the focussing mirrors 17, 18: 231 m, folding mirrors 13, 14: plane mirrors, number of passes along the collimation portion 3: 30*11 (15 circulations through the system yielding 30 passes though the collimated beam section which is folded 11 times), folded optical path length between the two focusing mirrors: 20m, corresponding to k = 2 and N = 15.

The embodiment of Figure 6 provides large beam spot sizes while enabling compact setup sizes, combining folded collimated beam paths as utilized for the first embodiment of Figures 2 or 4. For k/N → 0, the beam between both mirrors of a conventional MPC would approach a collimated geometry, as illustrated in panel (3) of Figure 3.

In contrast to the conventional MPC, e. g. according to Figure 1, operated close to the outer stability edge (k/N $\approx$ 1), the multi-pass cell device employed according to the invention can be folded using folding mirrors 13, 14 similar to the collimating portion 3 of the multi-pass cell device 10 of Figure 2, but without limiting $E_{max}$. This way, a compact setup can be constructed supporting high pulse energies, requiring, however, mirrors with very long radius of curvature.

As an example, for $F_m$ = 0.5 mJ/cm$^2$, N = 15, $\lambda$ = 1030 nm, R = 231 m and a folded optical path length between the two focusing mirrors L = 20 m, a pulse energy of about 120 mJ would be supported. The setup size can, however, be very compact as the beam path can be folded multiple times along the length L of the beam path 2.

With a further practical implementation, the multi-pass cell device of Figure 6 can also be configured in a down-scaled configuration e.g. with the following parameters: dimensions of the folding mirrors 13, 14: 6 cm * 4 cm, dimensions of the focusing mirrors 17, 18: 1 cm * 4 cm, radius of curvature of the focusing mirrors 17, 18: 11.5 m, folding mirror 14, 14: close to plane mirrors, number of passes along the collimation portion 3: 30*11 (15 circulations through the system yielding 30 passes though the collimated portion which is folded 11 times), folded optical path length between the two focusing mirrors: 1 m, corresponding to k = 2 and N = 15.

As an example, for the above-mentioned parameter set, i.e. with $F_m$ = 0.5 mJ/cm$^2$, N = 15, $\lambda$ = 1030 nm, R = 231 m and a folded optical path length between the two focusing mirrors L = 1 m, a pulse energy of about 6 mJ would be supported. The setup size can, however, be very compact with a footprint of the beam propagation area of only about 6 * 10 cm, yielding a total footprint of only about 10 * 16 cm for the total setup.

Figure 7 schematically illustrates an embodiment of a laser source apparatus 200 for creating laser pulses. The laser source apparatus 200 comprises a laser source 210, like a ps or sub-ps Ytterbium:YAG laser for creating primary laser pulses 1 to be broadened. The laser source 210 is coupled with the laser pulse spectral broadening apparatus 100 according to the invention, e. g. according to Figures 2, 5 or 6, being arranged in a closed, evacuable chamber 30. The laser pulse spectral broadening apparatus 100 receives the laser pulses 1 via an input section 2A, like a hole in one of the mirrors, and applies spectral broadening by multiple nonlinear interactions of the laser pulses 1A, which circulate in the multi-pass cell device 10, with the optical non-linear medium 21.

A pulse compression device 220 is arranged downstream of the output section 2B of the multi-pass cell device 10 for receiving the spectrally broadened laser pulses 1B via an output section 2B, like a hole in another one of the mirrors, and for temporal compressing of the spectrally broadened laser pulses 1B. Pulse compression is implemented with the pulse compression device 220 with a method as known in prior art, e. g. using temporal pulse compression with chirped mirrors. The pulse compression device 220 can be omitted if temporal pulse compression is not required or if temporal pulse compression is introduced in the laser pulse spectral broadening apparatus 100.

Figure 7 additionally shows an optional control device 230, which is coupled via a sensor (not shown) with the output of the laser pulse spectral broadening apparatus 100 or the pulse compression device 220. The control device 230 is arranged for adjusting at least one of the mirror elements of the multi-pass cell device 10 (e.g. the position of the mirror) and/or the laser source 210 in dependence on the spectrally broadened and optionally compressed laser pulses, e. g. temporal, spectral and/or amplitude features thereof. Thus, with a control loop including the control device 230, the pulse parameters can be optimized.

The features of the invention disclosed in the above description, the drawings and the claims can be of significance individually, in combination or sub-combination for the implementation of the invention in its different embodiments.

## Claims

1. Laser pulse spectral broadening apparatus (100), being configured for spectral broadening of laser pulses (1A), comprising

   - a multi-pass cell device (10) comprising multiple mirror elements (11, 12, 15, 16), which are arranged for providing a beam path (2) extending from an input section to an output section of the multi-pass cell device (10), wherein the mirror elements (11, 12, 15, 16) are arranged such that an accumulated half round trip Gouy phase parameter $G_{hrt}$ per half round trip through the multi-pass cell device (10) differs from n*$\pi$/2, with n being a natural number, and the mirror elements comprise focussing mirror elements (15, 16) having a concave curvature, and
   - a pulse spectral broadening device (20) including at least one optical non-linear medium (21, 22, 23) being arranged in the beam path (2) and being configured for spectral broadening of the laser pulses passing the pulse spectral broadening device (20), wherein the mirror elements (11, 12, 15, 16) have a configuration providing multiple passages of the beam path (2) through the pulse spectral broadening device (20),

   **characterized in that**

- the mirror elements further comprise folding mirror elements (11, 12) having a close to plane shape, wherein an absolute value of the radius of curvature of the close to plane folding mirror elements (11, 12) is larger than 10 m and the folding mirror elements (11, 12) span a folded collimation portion (3) of the beam path (2) and the beam path (2) has a degree of collimation along the whole collimation portion (3), such that an accumulated collimation portion Gouy phase parameter $G_{col}$ in the folded collimation portion (3) is $\pi/15 < G_{col} < \pi/2$.

2. Laser pulse spectral broadening apparatus according to claim 1, wherein

- the focussing mirror elements (15, 16) span a focal portion (4) of the beam path (2), wherein the focal portion (4) includes at least one focus of the beam path (2), and
- the collimation portion (3) and the focal portion (4) are arranged adjacent to each other, with the beam path (2) being folded by the folding mirror elements (11, 12), wherein the collimation portion (3) and the focal portion (4) are arranged such that the laser pulses alternatingly pass the collimation portion (3), wherein the laser pulses are reflected multiple times between the folding mirror elements (11, 12), and the focal portion (4).

3. Laser pulse spectral broadening apparatus according to claim 1, wherein

- the focussing mirror elements (15, 16) are arranged for reflecting end sections of the collimation portion (3) back to the collimation portion (3),
- the beam path (2) is free of a focus, and
- the multi-pass cell device (10) has the accumulated half round trip Gouy phase parameter $G_{hrt}$ with $\pi/15 < G_{hrt} < \pi/2$.

4. Laser pulse spectral broadening apparatus according to one of the foregoing claims, wherein the pulse spectral broadening device (20) includes at least one of the features

- the pulse spectral broadening device (20) is arranged in the collimation portion (3),
- the pulse spectral broadening device (20) is arranged close to at least one of the focussing mirror elements (15, 16),
- the pulse spectral broadening device (20) comprises multiple optical non-linear media (21, 22, 23), and
- the pulse spectral broadening device (20) comprises a gas medium (23) filling the entire multi-pass cell device (10).

5. Laser pulse spectral broadening apparatus according to one of the foregoing claims, wherein

- the folding mirror elements (11, 12) are provided by reflecting sections of two folding mirrors (13, 14), which are arranged with a distance relative to each other, and/or
- the focussing mirror elements (15, 16) are provided by reflecting sections of two focusing mirrors (17, 18), which are arranged with a distance relative to each other.

6. Laser pulse spectral broadening apparatus according to one of the foregoing claims, wherein

- the folding mirror elements (11, 12) are provided by a first group of folding mirrors and a second group of folding mirrors, wherein the first and second groups of folding mirrors are arranged with a distance from each other, and/or
- the focussing mirror elements (15, 16) are provided by a first group of focusing mirrors and a second group of focusing mirrors, wherein the first and second groups of focusing mirrors are arranged with a distance from each other.

7. Laser pulse spectral broadening apparatus according to one of the foregoing claims, wherein

- the folding mirror elements (11, 12) provide a single line or multiple lines multi-pass pattern (5) and/or the focussing mirror elements (15, 16) provide a single line or multiple lines multi-pass pattern (6).

8. Laser pulse spectral broadening apparatus according to one of the foregoing claims, wherein

- the folding mirror elements (11, 12) provide a circular or elliptical multi-pass pattern (7), and/or
- the focussing mirror elements (15, 16) provide a circular or elliptical multi-pass pattern (8).

9. Laser pulse spectral broadening apparatus according to one of the foregoing claims, wherein

- the folding mirror elements (11, 12) are arranged with a V configuration, wherein normal directions of the folding mirror elements (11, 12) enclose an inclination angle different from zero.

10. Laser pulse spectral broadening apparatus according to one of the foregoing claims, comprising at least one of the features

- the optical non-linear medium (21, 22) comprises at least one transparent plate, being transparent at the full spectral range of the broadened laser pulses (1A),
- at least one of the mirror elements (11, 12, 13, 14) is a chirped mirror element, and
- the multi-pass cell device (10) is arranged in a chamber (30) filled with a gas (23) as nonlinear medium.

11. Laser source apparatus (200), being configured for creating laser pulses, comprising

- a laser source (210) being arranged for creating primary laser pulses, and
- a laser pulse spectral broadening apparatus (100) according to one of the foregoing claims, being arranged for receiving and for spectral broadening of the primary laser pulses.

12. Laser source apparatus according to claim 11, comprising at least one of the features

- a beam mode of the laser source is matched to a light field mode defined by the multi-pass cell device (10) in nonlinear operation conditions taking the lensing effect of the at least one optical nonlinear medium (21, 22, 23) into account or in linear operation conditions, and
- a pulse compression device (220) is arranged for receiving and for temporal compressing of the spectrally broadened laser pulses.

13. Method of creating laser pulses (1B), comprising the steps of

- creating primary laser pulses (1A) with a laser source (210), and
- spectrally broadening the primary laser pulses (1A) with a laser pulse spectral broadening apparatus (100) according to one of the claims 1 to 10, and
- output of spectrally broadened laser pulses (1B).

14. Method according to claim 13, comprising at least one of the further steps of

- matching a beam mode of the laser source (210) to a light field mode defined by the multi-pass cell device (10),
- temporally compressing the spectrally broadened laser pulses (1B) with a pulse compression device (220), and
- temporally compressing the spectrally broadened laser pulses with the multi-pass cell device (10).

**Patentansprüche**

1. Vorrichtung (100) zur spektralen Verbreiterung von Laserpulsen, die zur spektralen Verbreiterung von Laserpulsen (1A) ausgestaltet ist, umfassend

- eine Multipasszelleneinrichtung (10), die mehrere Spiegelelemente (11, 12, 15, 16) umfasst, die zum Bereitstellen eines Strahlengangs (2) angeordnet sind, der sich von einem Eingangsabschnitt zu einem Ausgangsabschnitt der Multipasszelleneinrichtung (10) erstreckt, wobei die Spiegelelemente (11, 12, 15, 16) so angeordnet sind, dass ein Parameter $G_{hrt}$, der die akkumulierte Halbumlauf-Gouy-Phase angibt, pro Halbumlauf durch die Multipasszelleneinrichtung (10) hindurch von $n*\pi/2$ verschieden ist, wobei n eine natürliche Zahl ist, und wobei die Spiegelelemente Fokussierspiegelelemente (15, 16) umfassen, die eine konkave Krümmung aufweisen, und
- eine Einrichtung (20) zur spektralen Verbreiterung von Pulsen, die mindestens ein nichtlineares optisches Medium (21, 22, 23) umfasst, das in dem Strahlengang (2) angeordnet ist und zur spektralen Verbreiterung der Laserpulse, die durch die Einrichtung (20) zur spektralen Verbreiterung von Pulsen passieren, ausgestaltet ist, wobei die Spiegelelemente (11, 12, 15, 16) eine Ausgestaltung aufweisen, die mehrere Durchgänge des Strahlengangs (2) durch die Einrichtung (20) zur spektralen Verbreiterung von Pulsen bereitstellt,

EP 4 120 485 B1

**dadurch gekennzeichnet, dass**

- die Spiegelelemente ferner Faltungsspiegelelemente (11, 12) umfassen, die eine annähernd ebene Form aufweisen, wobei ein Absolutwert des Krümmungsradius der annähernd ebenen Faltungsspiegelelemente (11, 12) größer als 10 m ist und die Faltungsspiegelelemente (11, 12) einen gefalteten Kollimationsteil (3) des Strahlengangs (2) aufspannen und der Strahlengang (2) einen Kollimationsgrad entlang des gesamten Kollimationsteils (3) aufweist, sodass ein Parameter $G_{col}$, der die akkumulierten Gouy-Phase im Kollimationsteil bezeichnet, in dem gefalteten Kollimationsteil (3) $\pi/15 < G_{col} < \pi/2$ beträgt.

2. Vorrichtung zur spektralen Verbreiterung von Laserpulsen nach Anspruch 1, wobei

- die Fokussierspiegelelemente (15, 16) einen Fokussierungsteil (4) des Strahlengangs (2) überspannen, wobei der Fokussierungsteil (4) mindestens einen Brennpunkt des Strahlengangs (2) umfasst, und
- der Kollimationsteil (3) und der Fokussierungsteil (4) benachbart zueinander angeordnet sind, wobei der Strahlengang (2) von den Faltungsspiegelelementen (11, 12) gefaltet wird, wobei der Kollimationsteil (3) und der Fokussierungsteil (4) so angeordnet sind, dass die Laserpulse den Kollimationsteil (3) abwechselnd passieren, wobei die Laserpulse mehrmals zwischen den Faltungsspiegelelementen (11, 12) und dem Fokussierungsteil (4) reflektiert werden.

3. Vorrichtung zur spektralen Verbreiterung von Laserpulsen nach Anspruch 1, wobei

- die Fokussierspiegelelemente (15, 16) zum Zurückreflektieren von Endabschnitten des Kollimationsteils (3) zurück zu dem Kollimationsteil (3) angeordnet sind,
- der Strahlengang (2) keinen Brennpunkt aufweist, und
- die Multipasszelleneinrichtung (10) den akkumulierten Halbumlauf-Gouy-Phasen-Parameter $G_{hrt}$ mit $\pi/15 < G_{hrt} < \pi/2$ aufweist.

4. Vorrichtung zur spektralen Verbreiterung von Laserpulsen nach einem der vorhergehenden Ansprüche, wobei die Einrichtung (20) zur spektralen Verbreiterung von Pulsen mindestens eines der folgenden Merkmale umfasst

- die Einrichtung (20) zur spektralen Verbreiterung von Pulsen ist in dem Kollimationsteil (3) angeordnet,
- die Einrichtung (20) zur spektralen Verbreiterung von Pulsen ist in der Nähe von mindestens einem der Fokussierspiegelelemente (15, 16) angeordnet,
- die Einrichtung (20) zur spektralen Verbreiterung von Pulsen umfasst mehrere nichtlineare optische Medien (21, 22, 23), und
- die Einrichtung (20) zur spektralen Verbreiterung von Pulsen umfasst ein Gasmedium (23), das die gesamte Multipasszelleneinrichtung (10) ausfüllt.

5. Vorrichtung zur spektralen Verbreiterung von Laserpulsen nach einem der vorhergehenden Ansprüche, wobei

- die Faltungsspiegelelemente (11, 12) von reflektierenden Abschnitten von zwei Faltungsspiegeln (13, 14) bereitgestellt werden, die einander gegenüber in einem Abstand angeordnet sind, und/oder
- die Fokussierspiegelelemente (15, 16) von reflektierenden Abschnitten von zwei Fokussierspiegeln (17, 18) bereitgestellt werden, die einander gegenüber in einem Abstand angeordnet sind.

6. Vorrichtung zur spektralen Verbreiterung von Laserpulsen nach einem der vorhergehenden Ansprüche, wobei

- die Faltungsspiegelelemente (11, 12) von einer ersten Gruppe von Faltungsspiegeln und einer zweiten Gruppe von Faltungsspiegeln bereitgestellt werden, wobei die erste und die zweite Gruppe von Faltungsspiegeln in einem Abstand zueinander angeordnet sind, und/oder
- die Fokussierspiegelelemente (15, 16) von einer ersten Gruppe von Fokussierspiegeln und einer zweiten Gruppe von Fokussierspiegeln bereitgestellt werden, wobei die erste und die zweite Gruppe von Fokussierspiegeln in einem Abstand zueinander angeordnet sind.

7. Vorrichtung zur spektralen Verbreiterung von Laserpulsen nach einem der vorhergehenden Ansprüche, wobei

- die Faltungsspiegelelemente (11, 12) ein einzeiliges oder mehrzeiliges Multipassmuster (5) bereitstellen und/oder die Fokussierspiegelelemente (15, 16) ein einzeiliges oder mehrzeiliges Multipassmuster (6) bereitstellen.

8. Vorrichtung zur spektralen Verbreiterung von Laserpulsen nach einem der vorhergehenden Ansprüche, wobei

- die Faltungsspiegelelemente (11, 12) ein kreisförmiges oder elliptisches Multipassmuster (7) bereitstellen, und/oder
- die Fokussierspiegelelemente (15, 16) ein kreisförmiges oder elliptisches Multipassmuster (8) bereitstellen.

9. Vorrichtung zur spektralen Verbreiterung von Laserpulsen nach einem der vorhergehenden Ansprüche, wobei

- die Faltungsspiegelelemente (11, 12) in einer V-Konfiguration angeordnet sind, wobei Normalenrichtungen der Faltungsspiegelelemente (11, 12) einen von null verschiedenen Neigungswinkel umschließen.

10. Vorrichtung zur spektralen Verbreiterung von Laserpulsen nach einem der vorhergehenden Ansprüche, die mindestens eines der folgenden Merkmale umfasst

- das nichtlineare optische Medium (21, 22) umfasst mindestens eine transparente Platte, die über den gesamten Spektralbereich der verbreiterten Laserpulse (1A) hinweg transparent ist,
- mindestens eines der Spiegelelemente (11, 12, 13, 14) ist ein gechirptes Spiegelelement, und
- die Multipasszelleneinrichtung (10) ist in einer Kammer (30) angeordnet, die mit einem Gas (23) als nichtlineares Medium gefüllt ist.

11. Laserquellenvorrichtung (200), die zum Erzeugen von Laserpulsen ausgestaltet ist, umfassend

- eine Laserquelle (210), die zum Erzeugen von primären Laserpulsen angeordnet ist, und
- eine Vorrichtung (100) zur spektralen Verbreiterung von Laserpulsen nach einem der vorhergehenden Ansprüche, die zum Aufnahmen und zum spektralen Verbreitern der primären Laserpulse angeordnet ist.

12. Laserquellenvorrichtung nach Anspruch 11, die mindestens eines der folgenden Merkmale umfasst

- eine Strahlmode der Laserquelle ist auf eine Lichtfeldmode angepasst, die von der Multipasszelleneinrichtung (10) in nichtlinearen Operationen unter Berücksichtigung des Linseneffekts des mindestens einen nichtlinearen optischen Mediums (21, 22, 23) oder in linearen Operationen definiert wird, und
- eine Pulskompressionseinrichtung (220) ist zum Aufnehmen und zum zeitlichen Komprimieren der spektral verbreiterten Laserpulse angeordnet.

13. Verfahren zur Erzeugung von Laserpulsen (1B), das die folgenden Schritte umfasst

- Erzeugen von primären Laserpulsen (1A) mit einer Laserquelle (210), und
- spektrales Verbreitern der primären Laserpulse (1A) mit einer Vorrichtung (100) zur spektralen Verbreiterung von Laserpulsen nach einem der Ansprüche 1 bis 10, und
- Ausgeben von spektral verbreiterten Laserpulsen (1B).

14. Verfahren nach Anspruch 13, das mindestens einen der folgenden weiteren Schritte umfasst

- Abstimmen einer Strahlmode der Laserquelle (210) auf eine Lichtfeldmode, die von der Multipasszelleneinrichtung (10) definiert wird,
- zeitliches Komprimieren der spektral verbreiterten Laserpulse (1B) mit einer Pulskompressionseinrichtung (220), und
- zeitliches Komprimieren der spektral verbreiterten Laserpulse mit der Multipasszelleneinrichtung (10).

**Revendications**

1. Appareil d'élargissement spectral d'impulsions laser (100), configuré pour l'élargissement spectral d'impulsions laser (1A), comprenant

- un dispositif de cellule multipassage (10) comprenant plusieurs éléments de miroir (11, 12, 15, 16), lesquels sont agencés pour fournir une trajectoire de faisceau (2) s'étendant d'une section d'entrée à une section de sortie du dispositif de cellule multipassage (10), dans lequel les éléments de miroir (11, 12, 15, 16) sont agencés de telle façon qu'un paramètre indiquant la phase de Gouy accumulée de demi-trajet aller-retour $G_{hrt}$ par demi-trajet aller-retour à travers le dispositif de cellule multipassage (10) diffère de $n*\pi/2$, où n est un nombre naturel, et les éléments de miroir comprennent des éléments de miroir de focalisation (15, 16) présentant une courbure concave, et

- un dispositif d'élargissement spectral d'impulsions (20) incluant au moins un support non linéaire optique (21, 22, 23) agencé sur la trajectoire de faisceau (2) et configuré pour l'élargissement spectral des impulsions laser passant par le dispositif d'élargissement spectral d'impulsions (20), dans lequel les éléments de miroir (11, 12, 15, 16) présentent une configuration fournissant plusieurs passages de la trajectoire de faisceau (2) à travers le dispositif d'élargissement spectral d'impulsions (20),

**caractérisé en ce que**

- les éléments de miroir comprennent en outre des éléments de miroir de repli (11, 12) présentant une forme approximativement plane, dans lequel une valeur absolue du rayon de courbure des éléments de miroir de repli approximativement plans (11, 12) est supérieure à 10 m et les éléments de miroir de repli (11, 12) couvrent une portion de collimation repliée (3) de la trajectoire de faisceau (2) et la trajectoire de faisceau (2) présente un degré de collimation le long de l'ensemble de la portion de collimation (3), de sorte qu'un paramètre indiquant la phase de Gouy accumulée de portion de collimation $G_{col}$ dans la portion de collimation repliée (3) est de $\pi/15 < G_{col} < \pi/2$.

2. Appareil d'élargissement spectral d'impulsions laser selon la revendication 1, dans lequel

- les éléments de miroir de focalisation (15, 16) couvrent une portion focale (4) de la trajectoire de faisceau (2), dans lequel la portion focale (4) inclut au moins un foyer de la trajectoire de faisceau (2), et
- la portion de collimation (3) et la portion focale (4) sont agencées de façon adjacente l'une par rapport à l'autre, la trajectoire de faisceau (2) étant replié par les éléments de miroir de repli (11, 12), dans lequel la portion de collimation (3) et la portion focale (4) sont agencées de telle façon que les impulsions laser passent de manière alternée par la portion de collimation (3), dans lequel les impulsions laser sont réfléchies plusieurs fois entre les éléments de miroir de repli (11, 12), et la portion focale (4).

3. Appareil d'élargissement spectral d'impulsions laser selon la revendication 1, dans lequel

- les éléments de miroir de focalisation (15, 16) sont agencés pour réfléchir des sections d'extrémité de la portion de collimation (3) vers la portion de collimation (3),
- la trajectoire de faisceau (2) est exempte de foyer, et
- le dispositif de cellule multipassage (10) présente un paramètre indiquant la phase de Gouy accumulée de demi-trajet aller-retour $G_{hrt}$ avec $\pi/15 < G_{hrt} < n/2$.

4. Appareil d'élargissement spectral d'impulsions laser selon l'une des revendications précédentes, dans lequel le dispositif d'élargissement spectral d'impulsions (20) inclut l'une au moins des caractéristiques suivantes

- le dispositif d'élargissement spectral d'impulsions (20) est agencé dans la portion de collimation (3),
- le dispositif d'élargissement spectral d'impulsions (20) est agencé à proximité de l'un au moins des éléments de miroir de focalisation (15, 16),
- le dispositif d'élargissement spectral d'impulsions (20) comprend plusieurs supports non linéaires optiques (21, 22, 23), et
- le dispositif d'élargissement spectral d'impulsions (20) comprend un milieu gazeux (23) remplissant l'ensemble du dispositif de cellule multipassage (10).

5. Appareil d'élargissement spectral d'impulsions laser selon l'une des revendications précédentes, dans lequel

- les éléments de miroir de repli (11, 12) sont réalisés par des sections réfléchissantes de deux miroirs de repli (13, 14), lesquels sont agencés à une distance l'un de l'autre, et/ou
- les éléments de miroir de focalisation (15, 16) sont réalisés par des sections réfléchissantes de deux miroirs de focalisation (17, 18), lesquels sont agencés à une distance relative l'un de l'autre.

6.  Appareil d'élargissement spectral d'impulsions laser selon l'une des revendications précédentes, dans lequel

    - les éléments de miroir de repli (11, 12) sont réalisés par un premier groupe de miroirs de repli et un deuxième groupe de miroirs de repli, dans lequel les premier et deuxième groupes de miroirs de repli sont agencés à une distance l'un de l'autre, et/ou
    - les éléments de miroir de focalisation (15, 16) sont réalisés par un premier groupe de miroirs de focalisation et un deuxième groupe de miroirs de focalisation, dans lequel les premier et deuxième groupes de miroirs de focalisation sont agencés à une distance l'un de l'autre.

7.  Appareil d'élargissement spectral d'impulsions laser selon l'une des revendications précédentes, dans lequel

    - les éléments de miroir de repli (11, 12) fournissent un modèle multipassage à une seule ligne ou à plusieurs lignes (5) et/ou les éléments de miroir de focalisation (15, 16) fournissent un modèle multipassage à une seule ligne ou à plusieurs lignes (6).

8.  Appareil d'élargissement spectral d'impulsions laser selon l'une des revendications précédentes, dans lequel

    - les éléments de miroir de repli (11, 12) fournissent un modèle multipassage circulaire ou elliptique (7), et/ou
    - les éléments de miroir de focalisation (15, 16) fournissent un modèle multipassage circulaire ou elliptique (8).

9.  Appareil d'élargissement spectral d'impulsions laser selon l'une des revendications précédentes, dans lequel

    - les éléments de miroir de repli (11, 12) sont agencés selon une configuration en V, dans lequel des directions normales des éléments de miroir de repli (11, 12) forment un angle d'inclinaison différent de zéro.

10. Appareil d'élargissement spectral d'impulsions laser selon l'une des revendications précédentes, comprenant l'une au moins des caractéristiques suivantes

    - le support non linéaire optique (21, 22) comprend au moins une plaque transparente, laquelle est transparente sur l'ensemble de la plage spectrale des impulsions laser (1A) élargies,
    - l'un au moins des éléments de miroir (11, 12, 13, 14) est un élément de miroir de dérive de fréquence, et
    - le dispositif de cellule multipassage (10) est agencé dans une chambre (30) remplie d'un gaz (23) en tant que support non-linéaire.

11. Appareil de source laser (200), configuré pour créer des impulsions laser, comprenant

    - une source laser (210) agencée pour créer des impulsions laser primaires, et
    - un appareil d'élargissement spectral d'impulsions laser (100) selon l'une des revendications précédentes, agencé pour la réception et l'élargissement spectral des impulsions laser primaires.

12. Appareil de source laser selon la revendication 11, comprenant l'une au moins des caractéristiques suivantes

    - un mode de faisceau de la source laser est adapté à un mode de champ lumineux défini par le dispositif de cellule multipassage (10) dans des conditions de fonctionnement non-linéaire tenant compte de l'effet de lentille dudit au moins un support non linéaire optique (21, 22, 23) ou dans des conditions de fonctionnement linéaire, et
    - un dispositif de compression d'impulsions (220) est agencé pour la réception et la compression temporaire des impulsions laser élargies de façon spectrale.

13. Procédé de création d'impulsions laser (1B), comprenant les étapes suivantes

    - création d'impulsions laser primaires (1A) avec une source laser (210), et
    - élargissement spectral des impulsions laser primaires (1A) à l'aide d'un appareil d'élargissement spectral d'impulsions laser (100) selon l'une des revendications 1 à 10, et
    - émission des impulsions laser élargies de façon spectrale (1B).

14. Procédé selon la revendication 13, comprenant l'une au moins des étapes supplémentaires suivantes

    - adaptation d'un mode de faisceau de la source laser (210) à un mode de champ lumineux défini par le dispositif de cellule multipassage (10),
- compression temporaire des impulsions laser élargies de façon spectrale (1B) à l'aide d'un dispositif de compression d'impulsions (220), et
- compression temporaire des impulsions laser élargies de façon spectrale à l'aide du dispositif de cellule multipassage (10).

23396/EP Hz

FIG. 1
(Prior art)

FIG. 2 (A – C)

FIG. 2 (D)

FIG. 3

FIG. 4

FIG. 5

A

10

2

B

11
20  21  10  100

13
15  2  14
17  16  18

C

11
20  21  12

13  10  14
15  2  16
17  18

FIG. 6

200

210  2A  21  100  2B  220

1  10  1B

1A

30  1

230  FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9847615 B2

### Non-patent literature cited in the description

- **T. NAGY et al.** *Adv. Physics,* 2020, vol. X 6, 1845795
- **J. SCHULTE et al.** *Opt. Lett.,* 2016, vol. 41, 4511
- **L. LAVENU et al.** *Opt. Lett.,* 2018, vol. 43, 2252
- **C. GREBING et al.** *Opt. Lett.,* 2020, vol. 45, 6250
- **M. KAUMANNS et al.** *Opt. Lett.,* 2018, vol. 43, 5877
- **P. BALLA et al.** *Opt. Lett.,* 2020, vol. 45, 2572
- **J. SONG et al.** *Appl. Phys. B,* 2021, vol. 127, 50
- **K. FRITSCH et al.** *Opt. Lett.,* 2018, vol. 43, 4643
- **J. WEITENBERG et al.** *Opt. Express,* 2017, vol. 25, 20502
- **M. KAUMANNS et al.** *Opt. Lett.,* 2021, vol. 46, 929
- **E. A. KHAZANOV et al.** *Physics-Uspekhi,* 2019, vol. 62, 1096
- **C. HEYL et al.** *Optica,* 2016, vol. 3, 75
- **D. R. HERRIOTT et al.** *J. Opt. Soc. Am. B,* 2017, vol. 34, 1340
- **G. S. ENGEL et al.** *Opt. Lett.,* 2007, vol. 32, 704
- **F. GUICHARD et al.** *Optics Letters,* 2013, vol. 38 (21), 4437-4440
- **A. KLENKE et al.** *Optics Letters,* 2014, vol. 39 (12), 3520-3522
- **M. STANFIELD et al.** *Opt. Express,* 2021, vol. 29 (6), 9123
- **M. UEFFING et al.** *Optics Letters,* 2018, vol. 43, 2070